Europäisches Patentamt

European Patent Office

Office européen des brevets

(11) Publication number: **0 278 171 B1**

# EUROPEAN PATENT SPECIFICATION

(45) Date of publication of patent specification: **02.10.91** (51) Int. Cl.⁵: **H04N 7/06, H04N 7/08**

(21) Application number: **87311060.5**

(22) Date of filing: **15.12.87**

(54) System for broadcast and reception of audio/data signals.

(30) Priority: **16.12.86 GB 8629971**

(43) Date of publication of application:
**17.08.88 Bulletin 88/33**

(45) Publication of the grant of the patent:
**02.10.91 Bulletin 91/40**

(84) Designated Contracting States:
**AT BE CH DE ES FR GB GR IT LI LU NL SE**

(56) References cited:
**EP-A- 0 125 802**
**EP-A- 0 200 310**
**GB-A- 1 585 028**
**US-A- 4 544 950**

**FUNKSCHAU; 4/1984; MUNICH;
KLANK/ROTTMANN; "EMPFAENGER DER
ZUKUNFT"; PAGES 39-42**

(73) Proprietor: **Ferguson Limited
Cambridge House 270 Great Cambridge
Road
Enfield Middlesex, EN1 1UL(GB)**

(72) Inventor: **Harrison, Roger
27, Templars Close Greetland
Halifax West Yorkshire, HX4 8QE(GB)**
Inventor: **Holmes, Stuart Jackson
Tanelorn Bank End Micklethwaite
Bingley West Yorkshire(GB)**

(74) Representative: **Einsel, Robert, Dipl.-Ing.
Deutsche Thomson-Brandt GmbH Patent-
und Lizenzabteilung Göttinger Chaussee 76
W-3000 Hannover 91(DE)**

## Description

The present invention relates to a signal-pattern recognition technique particularly, but not solely, applicable to a system for the transmission of audio signals to accompany video signals, such a system being described in EP-A-0 200 310 published 05.11.86.

A proposed transmission system for stereo signals to accompany conventional television transmissions provides a serial data stream partitioned into 728-bit frames, each transmitted in a millisecond. Each frame has: a first section of eight bits comprising a Frame Alignment Word (FAW) which marks the start of the frame; a second section of five bits which provide control information, being one flag bit (namely $C_0$, which alternates between 0 and 1 every 8 milliseconds to determine odd and even frames over a 16 frame sequence) and four mode bits (namely $C_1$, $C_2$, and $C_3$, which indicate the nature of the transmitted signal, e.g. mono, stereo, dual-language, data); a third section of eleven bits of additional data, independent of the control information bits; and finally a fourth section of sixty-four 11-bit words corresponding to the audio (or data if appropriate) being transmitted, this last section having a total of 704 bits.

In a television receiver for use in the system, in order to avoid locking onto a bit pattern which is identical to the FAW and occurs at the same repetition frequency, there is monitoring also for the control bit pattern which follows each FAW (it being unlikely that such a pattern would follow a sequence mimicing a FAW); accordingly, a match is indicated only when both are present. The number of matches are counted up to a maximum and the number of mismatches counted down, a correct lock being indicated if the count exceeds a threshold.

The present invention provides a system for the broadcast and reception of audio/data signals to accompany transmitted video signals, in which system the audio/data signals comprise a stream of digital elements formed into a plurality of frames, each frame comprising three sections, namely a section to indicate the start of a frame, a section to contain control information, and a section to contain the audio/data information, whereby the system comprises signal locking means including means to monitor for the section indicating the start of a frame and for the section containing the control information, means to count the number of times that the monitor means detects both sections, means to subtract from the count derived by the counting means a predetermined fraction of the number of times that the monitor means does not detect both sections, and means to note when the value of the count subsequent to the operation of the subtraction means exceeds a threshold designating correct locking.

Thus, in the present invention, only a predetermined proportion of all mismatches are used to effect count down. Preferably, only every fourth mismatch is used in the counting operation; this may be achieved by applying every fourth mismatch to the count-down input of a counter in a television receiver for use in the system.

In this way, the system can now tolerate four times as many lost FAWs (which may occur due to noise) as previously, without producing false results. In the prior art system, each lost FAW results in a mismatch and then a count-down; several lost FAWs may therefore result in the count falling below the threshold, causing a false indication that lock has been lost.

Also, in the invention, there may be provided a number of counters which are used successively during the counting operation; preferably there are two counters, of which one is utilised for a predetermined number of frames of received signal, and then the other is utilised for the same predetermined number of subsequent frames, this procedure being repeated.

Accordingly, this arrangement can prevent a problem which may arise when only some of the mismatches are used in the down-count, such a problem being due to locking on to irrelevant audio waveforms which incidentally have patterns identical to that of the FAW and control code.

Thus, when valid FAWs are present, both counters count up in turn; at the end of twice the predetermined number of frames, both counters will be at the maximum count. However, when there exist some irrelevent audio waveforms which incidentally have patterns identical to that of the FAW and control code sequence, the first counter counts up to the maximum during the first predetermined number of frames the second counter counts down by a decreased amount; the same happens in the next batch of frames, at the end of which the count in the second counter is below the threshold and a loss of lock is indicated. Therefore, whereas in the prior art the effect of a large number of mismatches in one block of frames of predetermined number was cancelled by a large number matches in the next block, in the present invention a large number of mismatches in one block indicates loss of lock regardless of the number of matches in the next block.

The present invention also provides a television receiver for use in a system for the broadcast and reception of audio/data signals to accompany transmitted video signals, in which system the audio/data signals comprise a stream of digital elements formed into a plurality of frames, each frame comprising three sections, namely a section to indicate the start of a frame, a section to contain control information, and a section to contain the audio/data information, whereby the receiver comprises signal locking means including means to monitor for the section indicating the start of a frame and for the section containing the control information, means to count the number of times that the monitor means detects both sections, means to subtract from the count derived by the counting means a predetermined fraction of the number of times that the monitor means does not detect both sections, and means to note when the value of the count subsequent to the operation of the subtraction means exceeds a threshold designating correct locking.

The present invention also provides a method of operating a system for the broadcast and reception of audio/data signals to accompany transmitted video signals, in which system the audio/data signals comprise a stream of digital elements formed into a plurality of frames, each frame comprising three sections, namely a section to indicate the start of a frame, a section to contain control information, and a section to contain the audio/data information, whereby the method comprises signal locking including monitoring for the section indicating the start of a frame and for the section containing the control information, counting the number of times that the monitor stage detects both sections, subtracting from the count derived by the counting stage a predetermined fraction of the number of times that both sections are not detected in the monitor stage, and noting when the value of the count subsequent to the subtraction operation exceeds a threshold designating correct locking.

The present invention is applicable not just to a television receiver of the broadcast/reception system, but to any appropriate part of the system wherein signal locking is required. Thus the present invention embodies equipment other than television receivers. Moreover the present invention also embodies an integrated circuit which incorporates the features hereinabove defined for use in the system or a part thereof.

In order that the invention may more readily be understood, a description is now given, by way of example only, reference being made to the accompanying drawings in which:-

   Figures 1 and 2 are block diagrams of conventional equipment;
   Figure 3 is a graph of the effects of different error rates;
   Figure 4 is a block diagram of equipment embodying the present invention;
   Figure 5 is a block diagram of a transmission system applicable to the present invention;
   Figure 6 is a schematic representation of the structure of a stereo signal for use in the system of Figure 5;
   Figure 7 is a schematic diagram of part of a television receiver of the system of Figure 5;
   Figure 8 is a circuit diagram of part of a television receiver of the system of Figure 5;
   Figure 9 is a schematic diagram of waveforms which produce a false result in the equipment shown in Figure 7;
   Figure 10 is a schematic diagram of equipment embodying the present invention; and
   Figure 11 is another schematic diagram of equipment embodying the present invention.

A signal consists of portions each of 728 bits including an 8 bit synchronisation sequence. The bit stream corresponding to the signal is input to equipment to reconstitute it into the appropriate portions. A circuit is therefore required to demultiplex this bit stream i.e. sense the start of each frame and separate out the relevant data sections.

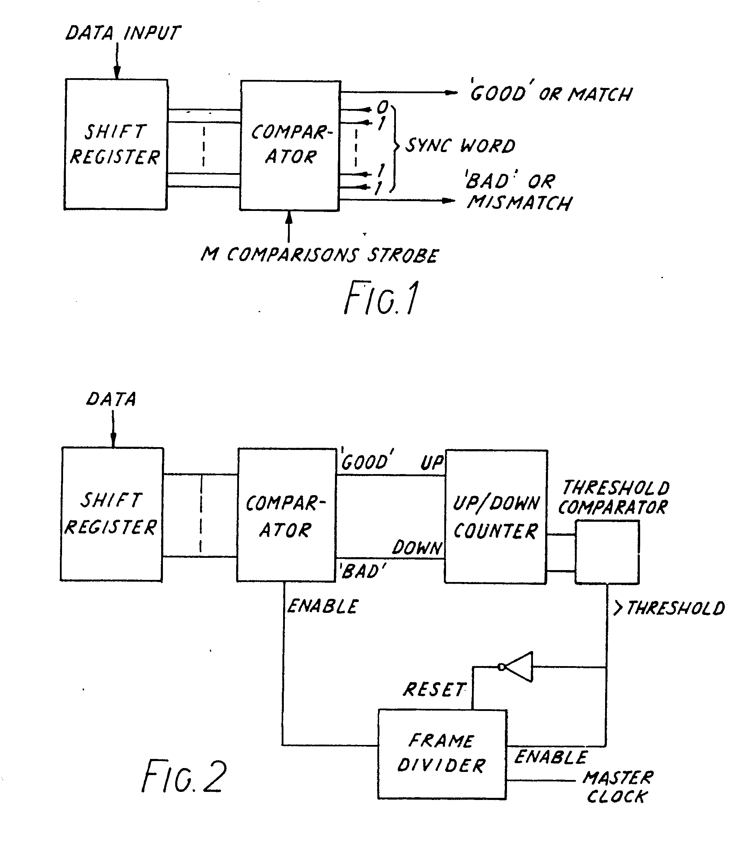

For this to happen, the first stage must be to detect the synchronisation bit sequence and this is achieved by the circuit in Figure 1. Here the incoming bit stream is clocked sequentially into a shift register, the output of which is compared with the known synchronisation sequence of incoming pulses match the known synchronisation sequence. Being a digital sequence this occurs under a master clock control and the output comparison is enabled using a strobe pulse as shown.

When the circuit is not synchronised and is "looking for" a new pulse train, the strobe signal is such as to allow a comparison to occur for every new incoming pulse (the comparison being instigated by the system clock locked to the incoming data rate). Once the system is locked or starting to become locked, the strobe pulse is normally be much less frequent i.e. a divider is included in the circuit as shown in Figure 2. This only allows a strobe pulse to lock at intervals of the transmitted frame. In this way, unwanted outputs from the comparator due to the synchronisation sequence being embedded in the data pattern are avoided.

It is important that this circuit locks on to the correct synchronisation bit stream, and that once locked, maintains lock even in high error rate conditions. The effect of the error rate is to reduce the chance of the synchronisation sequence being correctly identified. This is true even when the strobe pulse occurs at the correct time when the synchronisation sequence should be resident in the shift register. The circuit to be described is a method of reducing the effects of incoming errors so that the correct synchronisation pattern can be found and that an indication of lock is present even under high error rates.

The circuit forms a digital integrator which effectively integrates the good or bad 'tries', each 'try' occuring at every occurrence of the strobe pulse. When the strobe pulse occurs, either a "good" or a "bad" output is generated. The good represents a synchronisation sequence match whilst bad represents a mismatch. These pulses are presented to an up/down counter, therefore a succession of good pulses might make the counter count up (or down depending on the direction chosen).

The counter may be arranged to "jam" at a predetermined level i.e. count up to a certain number, say 7, and then stay at that number irrespective of the incoming good pulses. A bad pulse would make the counter count down. In this way, successive values of the counter are a measure of:

a) the time since the circuit started to acquire lock, and

b) an indication of error rate of the incoming signal.

A threshold may thus be created which indicates the probability of correct lock to a given confidence level.

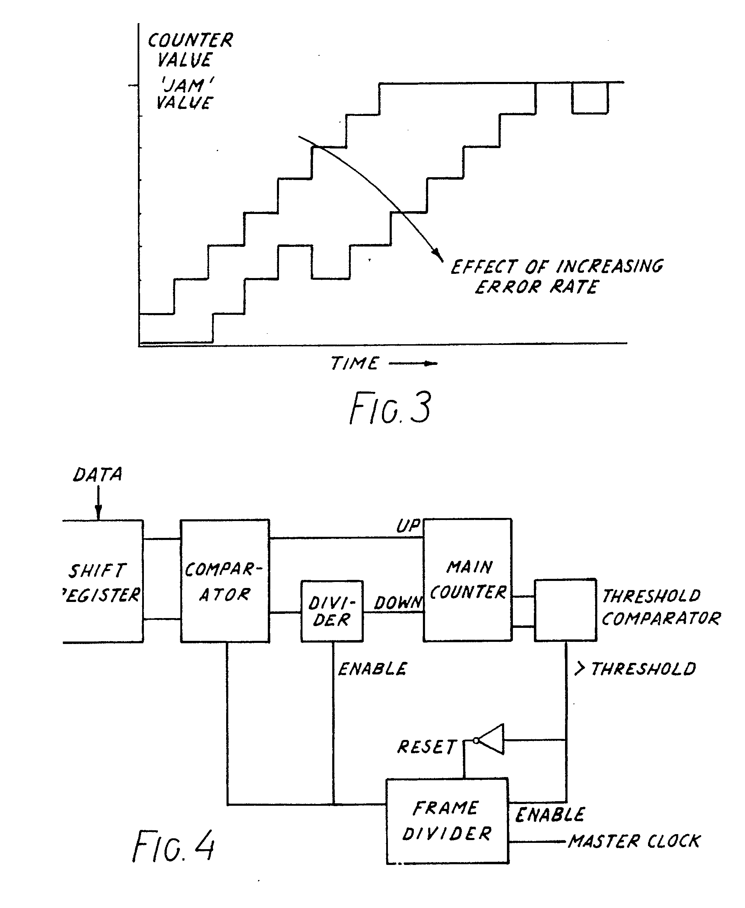

Figure 3 shows a typical counter value and the effect of increasing the incoming error rate. For no incoming errors the counter is always set at its maximum value but as the incoming error rate increases, the counter spends a greater proportion of the time with values less than the "jam" value. The comes a point when a probability of the good comparison will equal the probability of the bad comparison. At this point the counter will not, on average, count up or down and this represents a threshold whereby this circuit will not detect signals which have a higher error rate than the threshold level. For error rates below this threshold, the counter will, on average, count up, albeit that there is a finite probability that at any one time its count may not be at the "jam" value.

In order to ensure that any confidence threshold is meaningful for a given error rate, a minimum size counter must be used. The size of this counter can be calculated from the number of synchronisation bits, the input error rate, and the maximum acceptable probability of the count falling below the confidence threshold (these values would normally be chosen to be acceptable after initial lock-up time has occurred).

In order to improve the threshold, an extra counter can be added as shown in Figure 4. This counter is effectively a divider circuit and is placed in the down input to the main counter. The effect of this addition is to reduce the effect of down pulses i.e. there must be n false comparisons for every down input to the main counter. This can be thought of as altering the slope of the digital integrator acquisition and slow loss of size to give a fast lock to a slow analogue system. As the error rate increases, the threshold is now at a greater error rate because for every good pulse from the comparator, there can now be n bad pulses before a down pulse is produced. This system then will increase the immunity to errors for a given threshold level in the main counter; additionally, the main counter need not be capable of counting to as high a value as was previously the case since the effective noise on the down count is reduced and is thus less likely to cross the threshold in the downward direction.

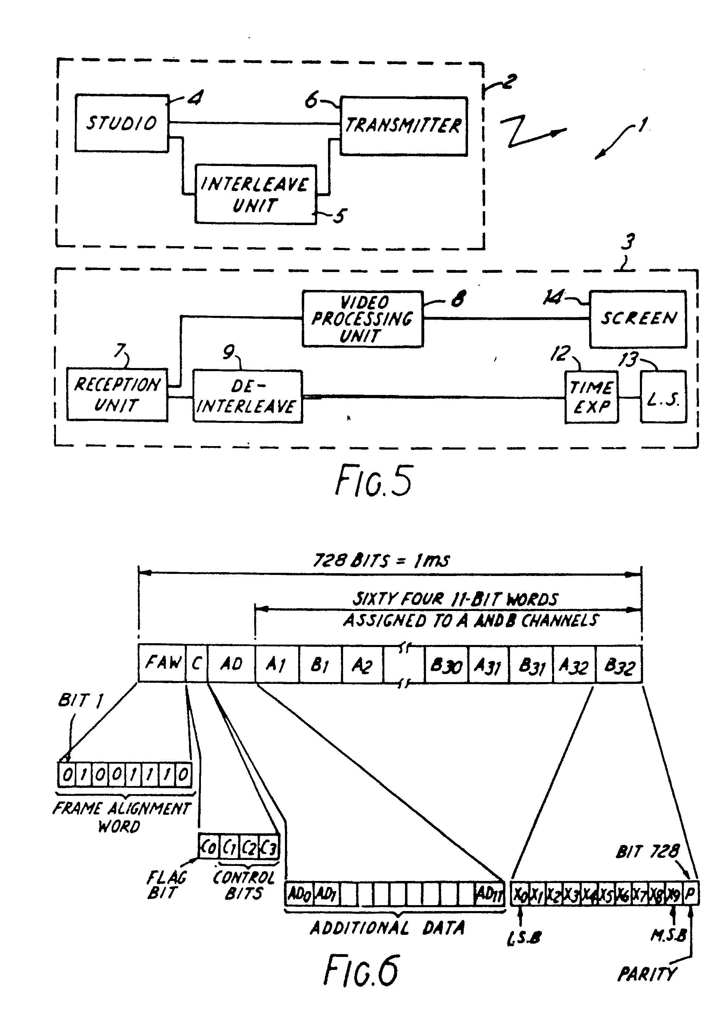

In Figure 5, there is shown a transmission system 1 for the transmission of PAL System-I television signals accompanied by an additional stereo signal for enhanced audio reception. The system includes a transmission station for enhanced audio reception. The system includes a transmission station 2 and a number of television receivers of which only one, referenced 3, is shown.

Receiver 3 may be a conventional PAL television receiver connected with a decoder unit specifically designed to process the stereo signal and reproduce the stereo sound at, or for, the receiver; alternatively, the receiver may be specifically designed to process the stereo signal as well as, or instead of, processing the audio signal incorporated in the PAL System-I signal.

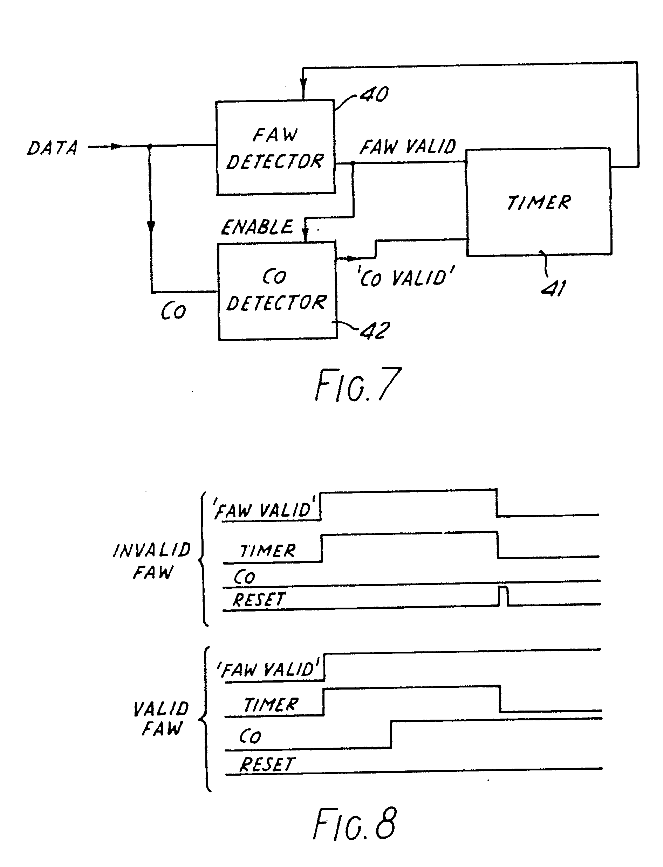

Transmission station 2 has a studio 4 which provides a recording consisting of a channel of video signals (incorporating the normal audio component) in accordance with the System-I PAL standard, and a channel of stereo signals of a format as shown in Figure 6. Signals of this stereo channel are passed to an interleaver unit 5 and then on to a transmitter 6 which broadcasts the PAL video channel and the stereo channel, the latter having a carrier frequency 6.552 MHz above the frequency of the transmitted vision carrier.

The combined signal passes to a reception unit 7 at television receiver 3, and is separated out again into the PAL video channel (the subsequent processing of which at video processing unit 8 is conventional and therefore a description is not pertinent) and the stereo channel which is input to a de-interleaver unit 9 of re-arrangement of the bits. A time expansion unit 12 increases the duration of the audio words to account for the other sections in a frame and the resultant signal passes through a D/A converter to a loudspeaker unit 13 for output synchronized with a display of the signal on the video channel at cathode ray tube screen 14.

Figure 6 shows the structure of one frame of the signal in the stereo channel of transmission system 1 before interleaving. The sixty-four words in the audio information section are arranged such as to alternate between the two output signals of the stereo channel, i.e. the first, third and subsequent odd words are associated with output signal B (e.g. the righthand side signal) of the stereo channel. Thus 32 words for each output signal of the stereo channel are transmitted in every frame.

The system 1 is capable of transmitting signals other than stereo signals on this channel; thus for example this channel may carry mono audio signals (these being of higher quality than those incorporated with the conventional PAL video signal) in one language or more, or data signals representing information other than sound and optionally related to the television display.

When non-changing audio information (e.g. silence) is being transmitted, the sampling system takes this stationary bit pattern (probably all "O") and multiplies it by a pseudo random sequence. This action creates false frame alignment code pulses. Frame alignment code pulses occur naturally anyway, since the probability of them occuring is 1 in 256, in one frame of information there are on average 2.8 frame alignment codes generated by chance. However, the frame alignment words are spaced at an interval of 728 clock cycles apart i.e. one frame. The detection system then waits for 728 clock cycles (lmS) before checking to see if the same bit pattern occurs. In this way the chance of getting successive FAW patterns is very low $(1/256)^n$ where n is the number of successive tries. Unfortunately, however the action of the psuedo random sequence generator on static bit patterns not only creates a FAW but additionally creates it at exactly the right interval since a false FAW is created at the same point in each frame after the true FAW. Under these circumstances, should a TV be turned on when there is a period of silence (or when in data transmission together with a mono signal where the data is a constant bit stream), the stereo decoder chip could lock on to the false FAW rather than the true FAW in the signal. There is no way to distinguish that this was a false lock condition.

To overcome this, the system has an additional timing circuit included. If one considers the locking circuit to be in two parts, the first part is a FAW detection circuit and the second part a $C_0$ bit detector (effectively a digital phase lock loop). Then the normal action of lock and enables the $C_0$ detection circuit to lock on the $C_0$ bit waveform, secondly, when the $C_0$ and FAW acquisition circuits indicate that both these signals are acquired, the receiver is allowed to procede with decoding sound.

Under false lock conditions, the $C_0$ decoder would not lock on to a $C_0$ signal since this bit is now incorrectly positioned and the data going into the $C_0$ decoder is not the bit in the transmission sequence. This information can be used to reset the FAW detection circuit. Thus, as shown in Figure 7, a FAW code circuit 40 generates an output indicating a valid frame alignment code pattern detection. This in turn starts a timing device 41 which times a period sufficient for the $C_0$ detector 42 to acquire lock under all useable signal conditions. At the end of this timing period, the $C_0$ detector is checked to see if a valid $C_0$ detection has taken place. If it has, no action is taken; but if it has not, the FAW detection circuitry is reset and a new frame alignment lock sequence initiated. Figure 8 shows appropriate waveforms.

Thus, the circuit of Figure 7 avoids the locking onto a bit pattern which is identical to the FAW and occurs at the same repetition frequency, by looking also for the control bit pattern which follows each FAW, and indicating a match only when both are present. The number of matches are counted up to a maximum and the number of mismatches counted down and correct lock is indicated if the count exceeds a threshold.

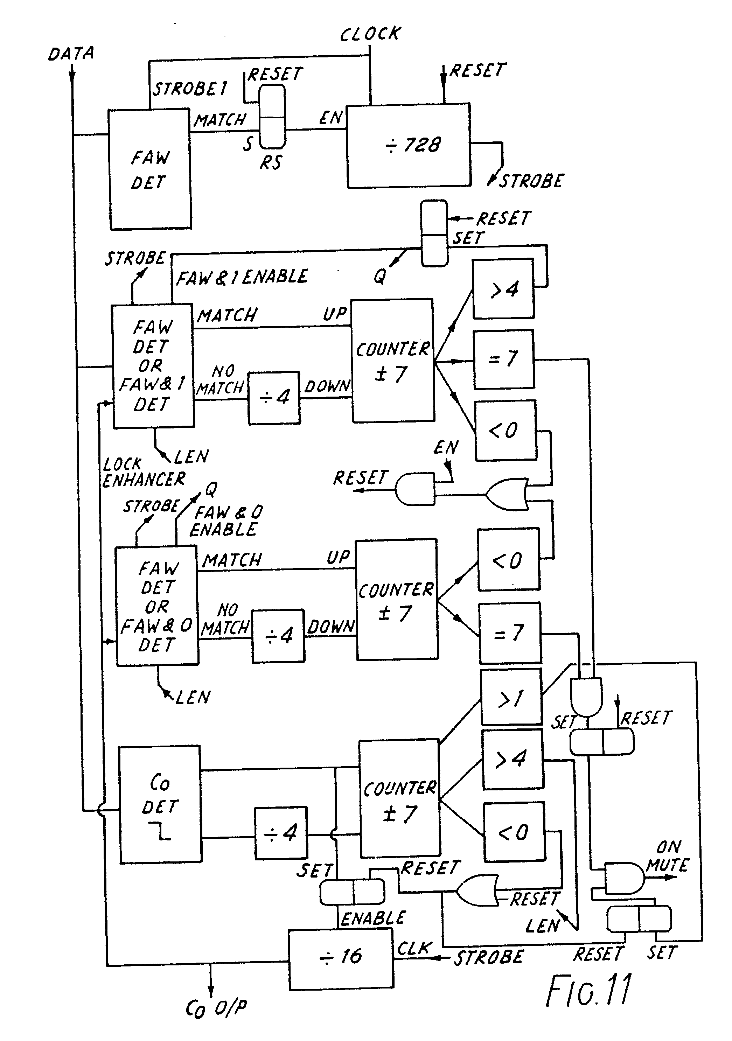

However FAWs may be lost due to noise, and each lost FAW will result in a mismatch and a down-count. Several lost FAWs may therefore result in the count falling below the threshold and a false indication that lock has been lost. In order to avoid this, the equipment shown in Figure 10 applies only every fourth mismatch to the down count input of the counters so that the equipment can tolerate four times as many lost FAWs as the equipment of Figure 7. There are, however, further conditions which can cause a valid $C_0$ waveform together with a number of frame alignment word (FAW) synchronisation sequences.

Such a situation might be a periodic signal locked to the stereo transmission frame and having a period equal to 16 frames i.e. 16mS. This situation might happen if the input to an audio coder were a squarewave having a half cycle occupying eight frames followed by a negative half cycle occupying a further eight frames.

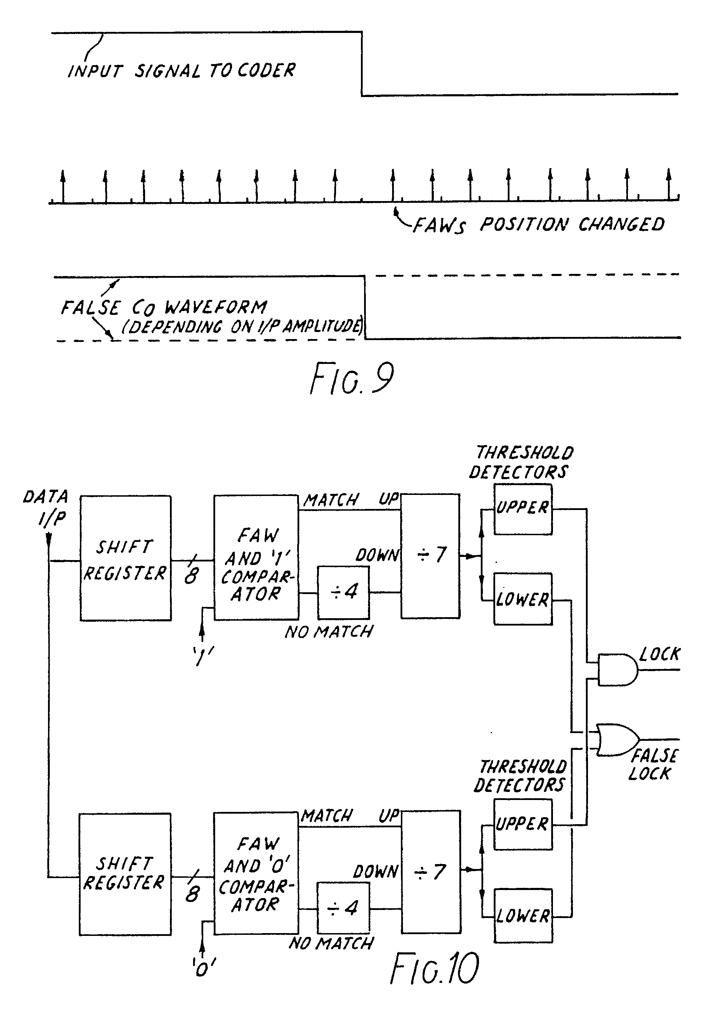

Such a signal, when scrambled, can generate FAWs whose corresponding $C_0$ bits alternate in the correct 16mS cycle (Figure 9). However, the action of the coding cycle, and in particular, the two's complement arithmetic for signifying a negative number, means that the sequence of scramble pulses during the negative half cycle is substantially different from those in the positive half cycle. This means that the false FAWs generated by the scrambling procedure are in a different position (relative to the correct FAW sequence) during the latter half of the input waveform (Figure 9).

The FAW decoder must be tolerant to missing FAW sequences (since this will happen under input noise conditions i.e. high error rates). The FAW detection circuit may well accept the decoded false FAW codes as being valid even though, at best, they are only likely to occur 50% of the time. The circuit shown in Figure 7 would thus be fooled since sufficient false FAWs would be produced to be considered as a valid FAWs and the corresponding false $C_0$ would correspond to the correct $C_0$ waveform over 16 frames. Thus, at the timeout position, both the FAW decoder and the $C_0$ decoder would be giving valid outputs and the system would consider a signal correctly locked.

This deficiency may be overcome by using the fact that such a situation will normally cause a shift in position of the FAWs on the second half of the cycle. Thus equipment shown in Figure 10 indicates, whether or not the input signal is valid since it utilises two decoders which decode the presence of a FAW together with a 1, and a FAW together with a O. The output from these detectors is applied to threshold circuits which decide the "good to bad" rate of "FAW and $C_0$" bit detections.

A suitable mark/space detector is shown as two counters, the final counter of which will count up if the input to mark space is above a critical value (determined by the first counter in the down input). For the waveform shown in Figure 9, one of the detectors counts up and then the other counts down, so that the combination of the two thresholds gives an invalid lock combination.

For a correct FAW lock, both counters count up (providing the minimum mark/space threshold is less than or equal to 50%); hence the circuit gives an output which is valid for a correct input sequence. This equipment, together with a $C_0$ detector and timer circuit as shown in Figure 7, forms a locking arrangement which will be immune to all false lock sequences except those which duplicate exactly the FAW and $C_0$ sequence over a 16mS period. The probability of those few sequences being generated by accident is extremely low.

During the locking sequence a number of false FAWs may be present and so the circuit will attempt to lock on to possibly each of these false FAWs, depending upon the initiation point. If the circuit in Figure 7 only were used, the $C_0$ timer would have to time out before a search were instigated. This timing period would be some integral number multiplied by 16mS. A suitable number might be 4, hence the false lock would last 64mS before being detected and the search re-instigated. For four false locks, the total delay would be 256mS giving quite a noticeable pause between say changing channels on a television. Use of the circuit in Figure 10 reduces this time considerably since the mark/space counters very rapidly count down and re-instigate a search. Typically, this may mean a delay of only 16mS to decode four false locks rather than the 256mS in the circuit of Figure 7.

There is shown in Figure 11 a detailed circuit diagram of equipment which is based on features shown in Figure 10.

## Claims

1. A system for the broadcast and reception of audio/data signals to accompany transmitted video signals, in which system the audio/data signals comprise a stream of digital elements formed into a plurality of frames, each frame comprising three sections, namely a section to indicate the start of a frame, a section to contain control information, and a section to contain the audio/data information, whereby the system comprises signal locking means including means to monitor for the section indicating the start of a frame and for the section containing the control information, means to count the number of times that the monitor means detects both sections, means to subtract from the count derived by the counting means a predetermined fraction of the number of times that the monitor means does not detect both sections, and means to note the value of the count subsequent to the operation of the subtraction means exceeds a threshold designating correct locking.

2. A system according to Claim 1 wherein the subtraction means is operable to subtract, from the count derived by the counting means, once in every four times that the monitor means does not detect both sections.

3. A system according to Claim 1 or 2, comprising a plurality of counting means for use successively, each for a predetermined common number of frames, during the counting operation.

4. A television receiver for use in a system for the broadcast and reception of audio/data signals to accompany transmitted video signals, in which system the audio/data signals comprise a stream of digital elements formed into a plurality of frames, each frame comprising three sections, namely a section to indicate the start of a frame, a section to contain control information, and a section to contain the audio/data information, whereby the receiver comprises signal locking means including means to monitor for the section indicating the start of a frame and for the section containing the control information, means to count the number of times that the monitor means detects both sections, means to subtract from the count derived by the counting means a predetermined fraction of the number of times that the monitor means does not detect both sections, and means to note which the value of the count subsequent to the operation of the subtraction means exceeds a threshold designating correct locking.

5. A television receiver according to Claim 4, wherein the subtraction means is operable to subtract, from the count derived by the counting means, once in every four times that the monitor means does not detect both sections.

6. A receiver according to Claim 4 or 5, comprising a plurality of counting means for use successively, each for a predetermined common number of frames, during the counting operation.

7. A method of signal-pattern recognition for the broadcast and reception of audio/data signals to accompany transmitted video signals, in which the audio/data signals comprise a stream of digital elements formed into a plurality of frames, each frame comprising three sections, namely a section to indicate the start of a frame, a section to contain control information, and a second to contain the audio/data information, whereby the method comprises a signal locking including monitoring for the section indicating the start of a frame and for the section containing the control information, counting the number of times that the monitor stage detects both sections, subtracting from the count derived by the counting stage a predetermined fraction of, the number of times that both sections are not detected in the monitor stage, and noting when the value of the count subsequent to the subtraction operation exceeds a threshold designating correct locking.

8. A method according to Claim 7, wherein the subtraction stage effects subtraction, from the count derived by the counting stage, once in every four times that the monitoring stage does not detect both sections.

9. A method according to Claim 7 or 8 comprising a plurality of counting means for use successively, each for a predetermined common number of frames, during the counting operation.

**Revendications**

1. Système de transmission et de réception de signaux audio/signaux de données pour accompagner les signaux vidéo transmis, système dans lequel les signaux audio/signaux de données comprennent un flux d'éléments numériques transformés en une pluralité de cadres, chaque cadre comprenant trois sections, à savoir une section pour indiquer le début d'un cadre, une section pour contenir des informations de commande et une section pour contenir les informations audio/informations de données, le système comprenant des moyens de verrouillage du signal comprenant des moyens pour contrôler la section indiquant le début d'un cadre et la section contenant des informations de commande, des moyens pour compter le nombre de fois que les moyens de contrôle détectent les deux sections, des moyens pour soustraire du compte obtenu par les moyens de comptage une fraction prédéterminée du nombre de fois que les moyens de contrôle ne détectent pas les deux sections et des moyens pour noter lorsque la valeur du compte obtenu après l'opération des moyens de soustraction dépasse un seuil indiquant un verrouillage correct.

2. Système selon la revendication 1, dans lequel les moyens de soustraction sont prêts à soustraire du compte obtenu par les moyens de comptage une fois sur quatre que les moyens de contrôle ne détectent pas les deux sections.

3. Système selon la revendication 1 ou 2, comprenant une pluralité de moyens de comptage à utiliser successivement, chacun pour un nombre commun prédéterminé de cadres, pendant l'opération de comptage.

4. Récepteur de télévision pour l'utilisation dans un système de transmission et de réception de signaux audio/signaux de données pour accompagner les signaux vidéo transmis, système dans lequel les signaux audio/signaux de données comprennent un flux d'éléments numériques transformés en une pluralité de cadres, chaque cadre comprenant trois sections, à savoir une section pour indiquer le début d'un cadre, une section pour contenir des informations de commande et une section pour contenir les informations audio/informations de données, le récepteur comprenant des moyens de verrouillage du signal comprenant des moyens pour contrôler la section indiquant le début d'un cadre et la section contenant des informations de commande, des moyens pour compter le nombre de fois que les moyens de contrôle détectent les deux sections, des moyens pour soustraire du compte obtenu par les moyens de comptage une fraction prédéterminée du nombre de fois que les moyens de contrôle ne détectent pas les deux sections et des moyens pour noter quelle valeur du compte obtenu après l'opération des moyens de soustraction dépasse un seuil indiquant un verrouillage correct.

5. Récepteur de télévision selon la revendication 4, dans lequel les moyens de soustraction sont prêts à soustraire du compte obtenu par les moyens de comptage une fois sur quatre que les moyens de contrôle ne détectent pas les deux sections.

6. Récepteur selon la revendication 4 ou 5, comprenant une pluralité de moyens de comptage à utiliser successivement, chacun pour un nombre commun prédéterminé de cadres, pendant l'opération de comptage.

7. Méthode de reconnaissance de profil de signal pour la transmission et la réception de signaux audio/signaux de données pour accompagner les signaux vidéo transmis, système dans laquelle les signaux audio/signaux de données comprennent un flux d'éléments numériques transformés en une pluralité de cadres, chaque cadre comprenant trois sections, à savoir une section pour indiquer le début d'un cadre, une section pour contenir des informations de commande et une section pour contenir les informations audio/informations de données, la méthode comprenant des moyens de verrouillage du signal comprenant des moyens pour contrôler la section indiquant le début d'un cadre et la section contenant des informations de commande, des moyens pour compter le nombre de fois que les moyens de contrôle détectent les deux sections, des moyens pour soustraire du compte obtenu par les moyens de comptage une fraction prédéterminée du nombre de fois que les moyens de contrôle ne détectent pas les deux sections et des moyens pour noter lorsque valeur du compte obtenu après l'opération de soustraction dépasse un seuil indiquant un verrouillage correct.

8. Méthode selon la revendication 7, dans laquelle l'étage de soustraction effectue la soustraction du compte obtenu par l'étage de comptage une fois sur quatre que l'étage de contrôle ne détecte pas les deux sections.

9. Méthode selon la revendication 7 ou 8 comprenant une pluralité de moyens de comptage à utiliser successivement, chacun pour un nombre commun prédéterminé de cadres pendant l'opération de comptage.

**Patentansprüche**

1. System zum Aussenden und Empfangen von Audio-/Datensignalen zur Begleitung ausgesendeter Videosignale, in dem die Audio-/Datensignale einen Strom von digitalen Elementen umfassen, die eine Vielzahl von Blökken bilden, wobei jeder Block drei Abschnitte umfaßt, nämlich einen Abschnitt zur Anzeige des Beginns eines Blocks, einen Abschnitt, der Steuerinformationen enthält, und einen Abschnitt, der die Audio-/Dateninformation enthält, wobei das System umfaßt: Signalfestlegungsmittel mit Mitteln zur Überwachung des den Beginn eines Blockes anzeigenden Abschnittes und des die Steuerinformation enthaltenden Abschnittes, Mittel zum Zählen der Anzahl von Malen, bei denen die Überwachungsmittel beide Abschnitte detektieren, Mittel, um von der von den Zählmitteln abgeleiteten Zählung einen vorgegebenen Bruchteil der Anzahl von Malen, bei denen die Überwachungsmittel beide Abschnitte nicht detektieren, zu subtrahieren, und Mittel, um zu vermerken, wenn der Wert der auf die Operation der Subtraktionsmittel folgenden Zählung einen Schwellwert überschreitet, der eine korrekte Festlegung kennzeichnet.

2. System nach Anspruch 1, bei dem die Subtraktionsmittel in der Lage sind, von der von den Zählmitteln abgeleiteten Zählung einmal bei jeden vier Malen, bei denen die Überwachungsmittel nicht beide Abschnitte detektieren, aine Subtraktion vorzunehmen.

3. System nach Anspruch 1 oder 2, das eine Vielzahl von Zählmitteln für aufeinanderfolgenden Einsatz während der Zähloperation, und zwar jedes für eine vorgegebene gemeinsame Anzahl von Blöcken, enthält.

4. Fernsehempfänger für die Verwendung in einem System zum Aussenden und Empfangen von Audio-/Datensignalen, die ausgesendete Videosignale begleiten, wobei die Audio-/Videosignale in dem System einen Strom von digitalen Elementen umfassen, die eine Vielzahl von Blöcken bilden, wobei jeder Block drei Abschnitte umfaßt, nämlich einen Abschnitt zur Anzeige des Beginns eines Blokkes, einen Abschnitt, der die Steuerinformationen enthält, und einen Abschnitt, der die Audio-/Dateninformation enthält, wobei der Empfänger umfaßt: Signalfestlegungsmittel mit Mitteln zur Überwachung des den Beginn eines Blockes anzeigenden Abschnittes und des die Steuerinformation enthaltenden Abschnittes, Mittel zum Zählen der Anzahl von Malen, daß die Überwachungsmittel beide Abschnitte erfassen, Mittel, um von der von den Zählmitteln abgeleiteten Zählung einen vorgegebenen Bruchteil der Anzahl von Malen, daß die Überwachungsmittel beide Abschnitte nicht erfassen, zu suntrahieren, und Mittel, um zu vermerken, wenn der Wert der auf die Operation der Subtraktionsmittel folgenden Zählung einen Schwellwert überschreitet, der eine korrekte Festlegung kennzeichnet.

5.  Fernsehempfänger nach Anspruch 4, bei dem die Subtraktionsmittel in der Lage sind, von der von den Zählmitteln abgeleiteten Zählung einmal bei jeden vier Malen zu subtrahieren, daß die Überwachungsmittel nicht beide Abschnitte erfassen.

6.  Empfänger nach Anspruch 4 oder 5, der eine Vielzahl von Zählmitteln für aufeinanderfolgenden Einsatz während der Zählung, und zwar jedes für eine vorgegebene gemeinsame Anzahl von Blöcken enthält.

7.  Verfahren zur Signal-Schemaerkennung für das Aussenden und Empfangen von Audio-/Datensignalen in Begleitung ausgesendeter Videosignale, bei dem die Audio-/Datensignale einen Strom von digitalen Elementen umfassen, die eine Vielzahl von Blöcken bilden, wobei jeder Block drei Abschnitte umfaßt, nämlich einen Abschnitt zur Anzeige des Beginns eines Blocks, einen Abschnitt, der Steuerinformationen enthält, und einen Abschnitt, der die Audio-/Dateninformation enthält, wobei das Verfahren umfaßt: Signalfestlegung mit Überwachung des den Beginn eines Blockes anzeigenden Abschnittes und des die Steuerinformationen enthaltenden Abschnittes, die Zählung der Anzahl von Malen, bei denen die Überwachungsstufe beide Abschnitte detektiert, Subtraktion eines vorgegebenen Bruchteils der Anzahl von Malen, bei denen die Überwachungsstufe beide Abschnitte nicht detektiert von der von den Zählmitteln abgeleiteten Zählung, und Vermerken, wenn der Wert der auf die Operation der Subtraktionsmittel folgenden Zählung einen Schwellwert überschreitet, der eine korrekte Festlegung kennzeichnet.

8.  Verfahren nach Anspruch 7, bei dem die Subtraktionsstufe von der von den Zählmitteln abgeleiteten Zählung einmal bei jeden vier Malen, bei denen die Überwachungsstufe beide Abschnitte nicht detektiert, eine Subtraktion bewirkt.

9.  Verfahren nach Anspruch 7 oder 8, das eine Vielzahl von Zählmitteln für aufeinanderfolgenden Einsatz während der Zähloperation für eine vorgegebene gemeinsame Anzahl von Blöcken enthält

DATA INPUT

SHIFT REGISTER

COMPAR-ATOR

M COMPARISONS STROBE

'GOOD' OR MATCH

0
1

SYNC WORD

1
1

'BAD' OR MISMATCH

*FIG.1*

DATA

SHIFT REGISTER

COMPAR-ATOR

'GOOD'      UP

UP/DOWN COUNTER

THRESHOLD COMPARATOR

DOWN

'BAD'

ENABLE

> THRESHOLD

RESET

FRAME DIVIDER

ENABLE

MASTER CLOCK

*FIG.2*

COUNTER
VALUE

'JAM'
VALUE

EFFECT OF INCREASING
ERROR RATE

TIME ⟶

*Fig.3*

DATA

SHIFT
REGISTER

COMPAR-
ATOR

DIVI-
DER

UP

DOWN

MAIN
COUNTER

THRESHOLD
COMPARATOR

> THRESHOLD

ENABLE

RESET

FRAME
DIVIDER

ENABLE

MASTER CLOCK

*Fig.4*

**FIG.5**

**FIG.6**

FIG.7

FIG.8

INPUT SIGNAL TO CODER

FAWs POSITION CHANGED

FALSE C₀ WAVEFORM
(DEPENDING ON I/P AMPLITUDE)

FIG.9

FIG.10

FIG. 11